**Europäisches Patentamt**

**European Patent Office**

**Office européen des brevets**

(11) Veröffentlichungsnummer: **0 255 972 B1**

# EUROPÄISCHE PATENTSCHRIFT

(45) Veröffentlichungstag der Patentschrift: **08.12.93**

(21) Anmeldenummer: **87201416.2**

(22) Anmeldetag: **23.07.87**

(51) Int. Cl.⁵: **H04J 1/08**, H04J 1/05

(54) **Mehrstufige Sender-Antennenkoppeleinrichtung.**

(30) Priorität: **08.08.86 DE 3626862**

(43) Veröffentlichungstag der Anmeldung:
**17.02.88 Patentblatt 88/07**

(45) Bekanntmachung des Hinweises auf die
Patenterteilung:
**08.12.93 Patentblatt 93/49**

(84) Benannte Vertragsstaaten:
**CH DE FR GB IT LI SE**

(56) Entgegenhaltungen:
**WO-A-86/00767**
**DE-A- 1 963 422**
**GB-A- 2 006 579**

(73) Patentinhaber: **Philips Patentverwaltung GmbH**
**Wendenstrasse 35c**
**D-20097 Hamburg(DE)**

(84) Benannte Vertragsstaaten:
**DE**

(73) Patentinhaber: **N.V. Philips' Gloeilampenfa-brieken**
**Groenewoudseweg 1**
**NL-5621 BA Eindhoven(NL)**

(84) Benannte Vertragsstaaten:
**CH FR GB IT LI SE**

(72) Erfinder: **Vary, Peter, Dr.-Ing.**
**Fasanenweg 70**
**D-8522 Herzogenaurach(DE)**
Erfinder: **Wellens, Ulrich, Dr.-Ing.**
**Tucherstrasse 16a**
**D-8501 Heroldsberg(DE)**

(74) Vertreter: **Peuckert, Hermann, Dipl.-Ing. et al**
**Philips Patentverwaltung GmbH,**
**Wendenstrasse 35c**
**D-20097 Hamburg (DE)**

EP 0 255 972 B1

Rank Xerox (UK) Business Services
(3. 10/3.6/3.3. 1)

EP 0 255 972 B1

**Beschreibung**

Die Erfindung betrifft ein Verfahren zum Ankoppeln mehrerer Sender unterschiedlicher Trägerfrequenzen an eine Antenne gemäß dem Oberbegriff der Patentansprüche 1 und 2.

In zukünftigen Funkübertragungssystemen mit digitaler oder analoger Sprachübertragung über die Funkübertragungsstrecken, z.B. in Autotelefonsystemen, muß eine sehr große Anzahl von Funkübertragungskanälen von der ortsfesten Funkstation abgestrahlt werden können. Um hierbei möglichst viele Funkübertragungskanäle von einer Antenne abstrahlen zu können, werden in einem Senderkoppler mehrere Funkübertragungskanäle im Hochfrequenzbereich zusammengefaßt. Aus der DE-C-28 44 776 ist ein Senderkoppler bekannt, welcher aus mehreren Zweigen mit jeweils einem Zirkulatornetzwerk und einem Bandpaßfilter besteht. Die Multiplexbildung der Ausgangssignale der verschiedenen Sender unterschiedlicher Trägerfrequenz erfolgt dabei mittels der Bandpaßfilter, welche einerseits mittels Leitungen zu einem Sternpunkt führen, der über eine Speiseleitung mit der Antenne verbunden ist und andererseits über die Zirkulatoren mit den Sendern in Verbindung stehen.

Um eine Entkopplung der Funkübertragungskanäle untereinander zu erzielen, müssen die einzelnen Kanalfrequenzen an einem Senderkoppler um ein Vielfaches des Systemkanalabstands (Kopplerkanalabstand) auseinanderliegen. Die maximal mögliche Anzahl der an einem Senderkoppler angeschlossenen Funkübertragungskanäle richtet sich nach der zulässigen Einfügungsdämpfung und der verfügbaren Bandbreite des Funkübertragungssystems. In der Praxis ist ein Leistungsverlust bei der Multiplexbildung von ca. 3 dB feststellbar. Dieser Leistungsverlust setzt sich aus dem Verlust im Y-Zirkulator von 0,5 dB, aus dem Verlust im Bandpaßfilter von ca. 1,5 dB und sonstigen Verlusten wie Reflexionsverlusten von ca. 1 dB zusammen.

An einem Senderkoppler können nur soviele Funkübertragungskanäle gleichzeitig angeschlossen werden, wie die Division der Bandbreite des Funkübertragungssystems durch den Kopplerkanalabstand ergibt. Mit abnehmendem Kopplerkanalabstand erhöht sich einerseits die Ausnutzung des Senderkopplers, andererseits erhöht sich bei einer höheren Anzahl von Kanälen auch die Einfügungsdämpfung des Senderkopplers, so daß die Verlustleistung zunimmt. Geringere Einfügungsdämpfungen lassen sich durch größere Dimensionierung der Bandpaßfilter erzielen, wodurch der Senderkoppler einerseits teuerer wird und andererseits ein höheres Volumen erfordert.

Die Bandpaßfilter werden auf eine bestimmte Betriebsfrequenz eingestellt und können nur nach erneutem Abgleich auf einer anderen Betriebsfrequenz arbeiten. Soll durch dynamische Kanalzuweisung eine Steigerung der Systemkapazität erreicht werden, so sind hierfür weitere Senderkopplereingänge zu schaffen, welche dann nur zeitweise genutzt werden. Durch diese Maßnahme steigt der Platzbedarf, die Anforderungen an den Kopplerkanalabstand und die Kosten für den Senderkoppler, so daß von einer dynamischen Kanalzuweisung in Funkübertragungssystemen bisher kein Gebrauch gemacht wurde.

In der DE-C-28 44 776 ist zur Umschaltung zwischen den verschiedenen Frequenzgruppen dem Senderkoppler ein Hybrid nachgeschaltet, welcher die Funktion eines Leistungsteilers, insbesondere einer Verzweigungsschaltung aufweist, wodurch eine Verteilung der Frequenzgruppen auf die jeweiligen Richtantennen erreicht wird.

Da der Senderkoppler im Ausgangsfrequenzbereich kanalselektiv arbeitet, muß jeder einzelne Funkübertragungskanal vor dem Senderkoppler entsprechend verstärkt werden. Eine Mehrfachausnützung der Leistungsverstärker ist beim Gegenstand der DE-C-28 44 776 nicht vorgesehen und auch eine Integration des Senderkopplers ist nicht möglich. Durch Verwendung eines geeigneten Dielektrikums können allerdings die äußeren Abmessungen eines z.B. luftgefüllten Bandpaßfilters reduziert werden.

Aus der DE-C-26 39 348 ist eine Schaltungsanordnung zum gegeneinander entkoppelten Anschalten mehrerer Sender an ein Antennensystem unter Verwendung von vier 3-dB-Kopplern bekannt. Als 3-dB-Koppler werden Hybride, d.h. Verzweigungsschaltungen in λ/4-Streifenleitungstechnik verwendet, an welche die vier einzelnen Sender und die vier einzelnen Antennen in bestimmter Weise angeschlossen sind. Die Hybride enthalten dabei drei Leitungen der Länge λ/4 sowie eine Leitung der Länge drei λ/4. Durch die Hybride wird die zugeführte Leistung der angeschlossenen Sender zur Hälfte auf beide Ausgänge aufgeteilt und durch die Phasenverschiebung im Ring wird das Auslöschen der zurücklaufenden Welle erreicht. Bei einer aus der DE-A-30 04 817 bekannten Schaltungsanordnung ist der beim Gegenstand der DE-C-26 39 348 aufgezeigte Weg weitergegangen worden und ein Senderkoppler in kaskadenförmiger Struktur mit phasendrehenden Schaltgliedern vorgeschlagen worden.

Wie Untersuchungen für die aus der DE-PS 26 39 348 und DE-A-30 04 817 bekannten Schaltungsanordnungen ergaben, weisen diese einen hohen Reflexionsfaktor auf, welcher durch Reflexion an den zum Ring zusammengeschlossenen Hybriden bzw. Richtkopplern bzw. an den Antennen hervorgerufen wird. Weiterhin ist von Nachteil, daß im Empfangsbereich Gebiete vollständiger Auslöschung des über die

2

Antenne abgestrahlten Sendesignals auftreten können. Dies ist darauf zurückzuführen, daß mittels der Antennenkonfiguration bestehend aus vier Richtantennen keine Rundcharakteristik erzielt werden kann, wobei durch Reflexionen an Gebäuden, Bäumen usw. infolge des Mehrwegeempfangs solche Auslöschungen auftreten können. Der Leistungsverlust solcher aus Hybriden bzw. Richtkopplern gebildeten Senderkopplern liegt dabei in der Größenordnung von herkömmlichen Senderkopplern mit Zirkulatornetzwerk und Bandpaßfilter.

Die durch Konvektion abgestrahlte Energie bei hoher Kanalzahl und hoher packungsdichte muß durch Zwangskühlung abgeführt werden. Da die Bandpaßfilter auf das Ausgangsfrequenzband abgestimmt sind, ist es nicht möglich, Kanäle z..B. zur Vermeidung von Gleichkanalstörungen umzuschalten, so daß stets für eine andere Ausgangsfrequenz ein manueller Abgleich erforderlich ist.

Der Erfindung liegt die Aufgabe zugrunde, ein Verfahren zum Ankoppeln mehrerer Sender an eine Antenne derart anzugeben, daß frequenzmäßig eng benachbarte Sendefrequenzen zusammengefaßt werden können, ohne daß hohe Anforderungen an die Bandpaßfilter gestellt werden müssen.

Diese Aufgabe wird erfindungsgemäß durch ein Verfahren mit den Merkmalen der Patentansprüche 1 und 2 gelöst.

Beim erfindungsgemäßen Verfahren nach Patentanspruch 1 werden in der ersten Stufe mehrere unmittelbar benachbarte Kanäle vorzugsweise im Basisband zusammengefaßt und für die so gebildeten Kanalgruppen wird in der zweiten Stufe die Multltiplexbildung mittels Bandpaßfilter vorgenommen. Die erste Stufe des Senderkopplers ist als digitaler Koppler realisiert, in dem neben der Multiplexbildung auch die Modulation des Nutzsignals vorgenommen wird.

Durch die Zusammenfassung unmittelbar benachbarter Kanäle beim erfindungsgemäßen Verfahren ergibt sich eine optimale Ausnutzung des verfügbaren Frequenzbands. Der Aufwand der nachfolgenden Schaltungsteile des Senderkopplers, zur Umsetzung der Signale auf die Ausgangsfrequenz und zur Leistungsverstärkung, reduziert sich um den Basisband-Multiplexfaktor M durch die Zusammenfassung der Ausgangssignale von jedem Sender in der Vorgruppenlage. Der Aufwand der zweiten Kopplerstufe für die Frequenzumsetzung von der Vorgruppenlage in die Gruppenlage kann um den Multiplexfaktor M reduziert werden. Bei der Zusammenfassung der Ausgangssignale der Sender in der Vorgruppenlage ist eine dynamische Kanalzuweisung durchführbar. Der Senderkoppler kann unter Verwendung monolithisch integrierter Bausteine auufgebaut werden, wodurch sich eine erhebliche Kostenreduktion ergibt.

Das Verfahren gemäß Patentanspruch 2 weist den Vorteil der dynamischen Kanalzuweisung und Reduktion der Leistungsverstärkung um den Basisband-Multiplexfaktor M auf.

Bevorzugte Ausgestaltungen des erfindungsgemäßen Verfahrens sind in weiteren Patentansprüchen angegeben.

Die Schaltungsanordnung zur Durchführung des Verfahrens gemäß Patentanspruch 6 für die erste Stufe des Senderkopplers erfordert einen geringen Schaltungsaufwand und kann integriert werden.

Bevorzugte Ausführungsformen der Schaltungsanordnung sind in weiteren Patentansprüchen angegeben.

Die Erfindung wird im folgenden anhand in der Zeichnung dargestellter Ausführungsformen näher beschrieben und erläutert. Es zeigt:

Fig. 1    eine Ausführungsform für einen bekannten Senderkoppler,

Fig. 2    die Struktur des erfindungsgemäßen Senderkopplers,

Fig. 3    die spektralen Zusammenhänge für eine digitale Signalverarbeitung im digitalen Koppler durch GTFM,

Fig. 4    eine Ausführungsform für die Zusammenfassung der Ausgangssignale jedes Senders in der Vorgruppenlage durch GTFM,

Fig. 5    eine weitere Ausführungsform für die Multiplexbildung in der ersten Stufe unter Verwendung nur eines Interpolators,

Fig. 6    eine Ausführungsform für einen periodisch zeitvariablen Interpolator für die Ausführungsform gemäß Fig. 5,

Fig. 7    eine weitere Ausführungsform für die digitale Signalverarbeitung in der ersten Stufe ohne DFT und mit erweiterten Cos-Sin-Speichern und

Fig. 8    eine weitere Ausführungsform für die Signalverarbeitung im digitalen Koppler unter Verwendung additiver Adress-Inkremente.

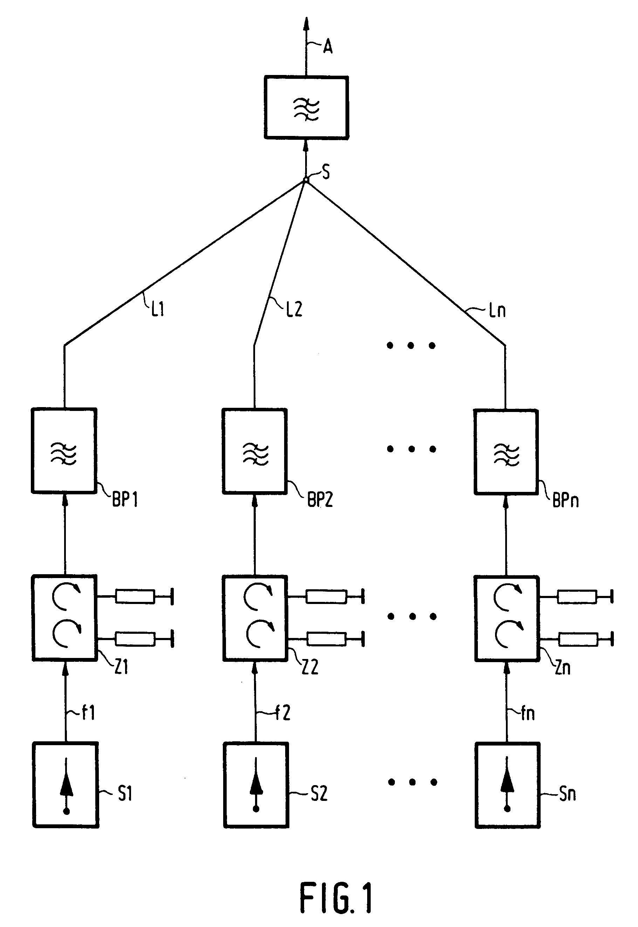

Fig. 1 zeigt eine Ausführungsform für einen bekannten Senderkoppler. Zum Ankoppeln mehrerer Sender S1, ..., Sn unterschiedlicher Trägerfrequenzen an eine Antenne A erfolgt die Multiplexbildung mittels Bandpaßfilter BP1, ..., BPn. Die Bandpaßfilter BP1, ..., BPn sind einerseits mittels Leitungen L1, ..., Ln mit einem Sternpunkt S verbunden, der über Zuleitungen zur Antenne A führt, und stehen andererseits über Zirkulatoren Z1, ..., Zn mit den Sendern S1, ..., Sn in Verbindung. Werden Doppelzirkulatoren verwendet, so liegt die Rückflußdämpfung (Return loss) bei ca. 50 dB. Für jede Sendefrequenz f1 bis fn sind in jedem Zweig ein Zirkulator und ein Bandpaßfilter angeordnet. Die im Ausgangsfrequenzband liegenden Frequenzen f1 bis fn können nur dann unbeeinflußt voneinander an die Antenne A weitergegeben werden, wenn |fi-fj| die Forderung des minimalen Frequenzabstands erfüllt.

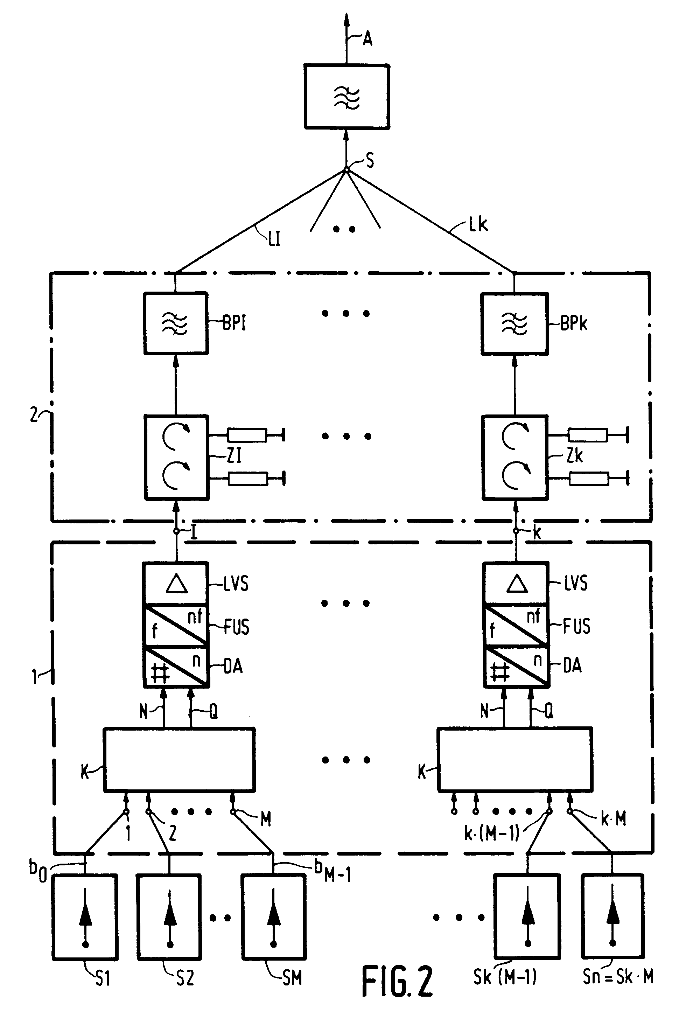

Beim erfindungsgemäßen Verfahren werden die Ausgangssignale der Sender S1, ..., Sn durch digitale Signalverarbeitung zusammengefaßt. Fig. 2 zeigt die Struktur des erfindungsgemäßen Senderkopplers, welcher zweistufig ausgebildet ist. Die Ausgangssignale (Quellensignale) $b_0$ ..., $b_{M-1}$ der Quellen bzw. Sender S1, ..., SM werden mittels eines digitalen Kopplers K in einer Vorgruppenlage zusammengefaßt. Die Ausgangssignale der parallel zueinander angeordneten digitalen Koppler K werden nach Digital-Analog-Umsetzung (mittels DA), Frequenzumsetzung in die Gruppenlage (mittels FUS), und Leistungsverstärkung (mittels LVS), jeweils einem Zirkulator ZI, ZII, ..., Zk zugeführt (k = n/M, wobei n die Anzahl der Eingänge ohne digitalen Koppler K der ersten Stufe ist). Das durch digitale Signalverarbeitung mittels des digitalen Kopplers K erzeugte Signal liegt an dessen Ausgang in Normal- und Quadraturkomponente (N, Q) vor. Diese Signale können zur direkten Frequenzumsetzung auf die Ausgangsfrequenz, d.h. die Gruppenlage, oder zur Umsetzung auf eine Zwischenfrequenz mit nachfolgender Frequenzumsetzung auf die Ausgangsfrequenz und anschließender Bandbaßfilterung benutzt werden. Bedingt durch die geringere Anzahl von Eingängen der zweiten Stufe können die Anforderungen an diese zweite Stufe erheblich reduziert werden.

Die zweite Stufe des digitalen Senderkopplers kann vorzugsweise so dimensioniert werden, daß das verfügbare Frequenzband vollständig ausgeschöpft wird. Gegenüber den bekannten Senderkopplern (vgl. DE-C-28 44 776) mit Zusammenfassung von analogen Signalen ergeben sich durch den größeren Frequenzabstand der zugeführten Signale dadurch die Möglichkeit die zweite Stufe mit geringerer Einfügungsdämpfung zu realisieren. Sowohl die Anforderungen an die Leistungsverstärkung der Nutzsignale als auch die gesamte Verlustleistung des Senderkopplers werden reduziert. Abhängig vom Basisband-Multiplexfaktor M können die Bandpaßfilter BPI, BPII, ...BPk ein- oder zweikreisig ausgeführt werden, um eine konstante Einfügungsdämpfung im verfügbaren Frequenzband zu gewährleisten.

Eine dynamische Kanalzuweisung innerhalb der ersten Stufe des Senderkopplers (digitaler Koppler K) erfordert keinen manuellen Abgleich der Bandbaßfilter BPI, BPII, ...BPk in der zweiten Kopplerstufe. Dadurch muß die zweite Kopplerstufe keine erhöhten Anforderungen an den Frequenzabstand erfüllen.

Intermodulationprodukte, welche von der Leistungsverstärkerstufe LVS erzeugt werden, fallen (entsprechend gedämpft) für alle Funkübertragungskanäle, welche in der ortsfesten Funkstation zur Informationsübertragung benutzt werden, an und werden ebenfalls über die Antenne A abgestrahlt. Durch entsprechende Dimensionierung der Endstufen unter Verwendung sehr linearer Verstärker können die Pegel der Intermodulationsprodukte reduziert werden. Um die Anzahl der entstehenden Intermodulationsprodukte und den Frequenzbereich, in dem Intermodulationsprodukte der dritten Ordnung mit hohem pegel liegen, kleinzuhalten, wird der Basis-Multiplexfaktor M vorzugsweise zwischen M = 4, ..., 8 gewählt. Fällt während des Betriebs eine der Leistungsverstärkerstufen LVS aus, so sind von dem Ausfall nur 4 bis 8 Funkübertragungskanäle der Funkstation betroffen.

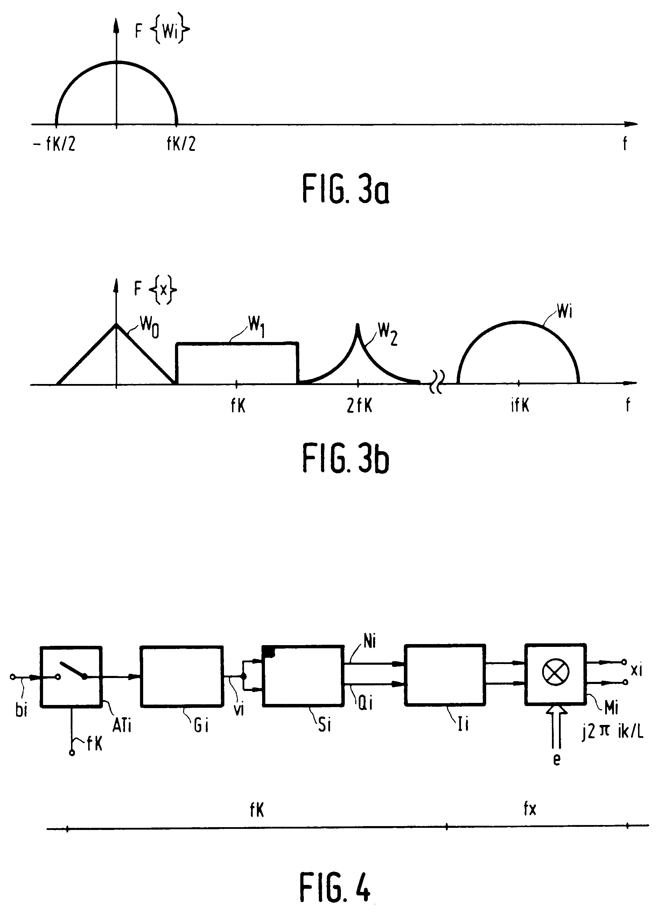

Das erfindungsgemäße Verfahren der digitalen Signalverarbeitung im digitalen Koppler K wird im folgenden unter Verwendung der GTFM (Generalized Tamed Frequency Modulation), wie diese aus der DE-B-28 38 984 bekannt ist, näher beschrieben und erläutert. Im digitalen Koppler K werden dabei GTFM-Basisbandsignale Wi der Bandbreite fK = 25 kHz erzeugt, diese GTFM-Basisband-Signale Wi in eine Vorgruppenlage verschoben und durch additive Überlagerung (Frequenzmultiplex) zusammengefaßt. Fig. 3a zeigt schematisch die Spektren der einzelnen GTFM-Basisbandsignale Wi, welche durch Quadraturmodulation bzw. Einseitenbandmodulation in ihre jeweilige Vorgruppenlage verschoben und überlagert werden (vgl. Fig. 3b).

Das durch digitale Signalverarbeitung gewonnene Multiplexsignal x(k) setzt sich demnach additiv aus den Komponenten xi(k) gemäß der Gleichung:

$$(1) \qquad x(k) = \sum_{i=0}^{M-1} xi(k)$$

zusammen. Dabei werden mit k ein Zeitindex (Abtastzeitpunkt), mit M der Basisband-Multiplexfaktor und mit i der Index des jeweiligen Funkübertragungskanals bezeichnet.

Anhand Fig. 4 wird im folgenden die Erzeugung der Komponente xi des i-ten Funkübertragungskanals (entsprechend zur aus der DE-B-28 38 984 bekannten GTFM) näher beschrieben und erläutert. Die Ausgangssignale $b_i$ des Senders Si werden einem mit einer ersten Abtastfrequenz fK betriebenen Abtaster ATi zugeführt. Der Abtaster ATi ist mit einem GTFM-Filter Gi verbunden.

Das Quellensignal bi des i-ten Funkübertragungskanals weist beispielsweise eine Bitrate fb = 19 kbit/s auf und der Kanalabstand im Multiplexsignal ist entsprechend der Bandbreite des GTFM-Spektrums beispielsweise zu fK = 25 kHz gewählt. Zunächst wird das komplexe GTFM-Basisbandsignal Wi gewonnen, dessen Spektrum in Fig. 3a dargestellt ist. Das GTFM-Basisband-Signal Wi läßt sich in Normal- und Quadratur-Komponente gemäß der Gleichung:

(2)    $Wi = Ni + j * Qi$

darstellen. Nach dem Abtasttheorem ist das GTFM-Basisbandsignal Wi mit der Abtastfrequenz fK abzutasten. Zur Reduzierung des Schaltungsaufwands wird das Quellensignal $b_i$ zunächst mit der Abtastfrequenz fK abgetastet und ein GTFM-Basisbandsignal Wi in einer in der DE-AS 28 38 984 beschriebenen Art und Weise gewonnen. Dabei wird das mit der Abtastfrequenz fK abgetastete Ausgangssignal $b_i$ digital mittels GTFM-Filter Gi gefiltert, welches mit einem Cos-Sin-Speicher Si verbunden ist. Das Ausgangssignal vi des GTFM-Filters Gi dient als Adresse für den Cos-Sin-Speicher Si.

Der Cos-Sin-Speicher Si ist mit einem Interpolator Ii verbunden. Wegen der größeren Bandbreite des Multiplexsignals x(k) ist vor der Spektralverschiebung des GTFM-Basisbandsignals Wi in die Vorgruppenlage eine Interpolation, d.h. eine Erhöhung der Abtastfrequenz von fK auf fx = L * fK durch digitale Interpolationsfilterung erforderlich. Die digitale Interpolationsfilterung unter Verwendung der um den Faktor L höheren zweiten Abtastfrequenz fx wird getrennt für Normal- und Quadratur-Komponente Ni, Qi des GTFM-Basisbandsignals Wi durchgeführt.

Der Interpolator Ii ist mit einem Multiplizierer Mi verbunden, welcher die gefilterte Normal- und QuadraturKomponente Ni, Qi mit jeweils einer cos- bzw. sin-Schwingung multiplikativ verknüpft, wodurch die Komponente xi in der Vorgruppenlage entsteht. Dieser Vorgang entspricht einer komplexen Quadraturmodulation. Bei der in Fig. 4 dargestellten Ausführungsform des digitalen Kopplers K ist für jeden Funkübertragungskanal ein Interpolationsfilter Ii erforderlich.

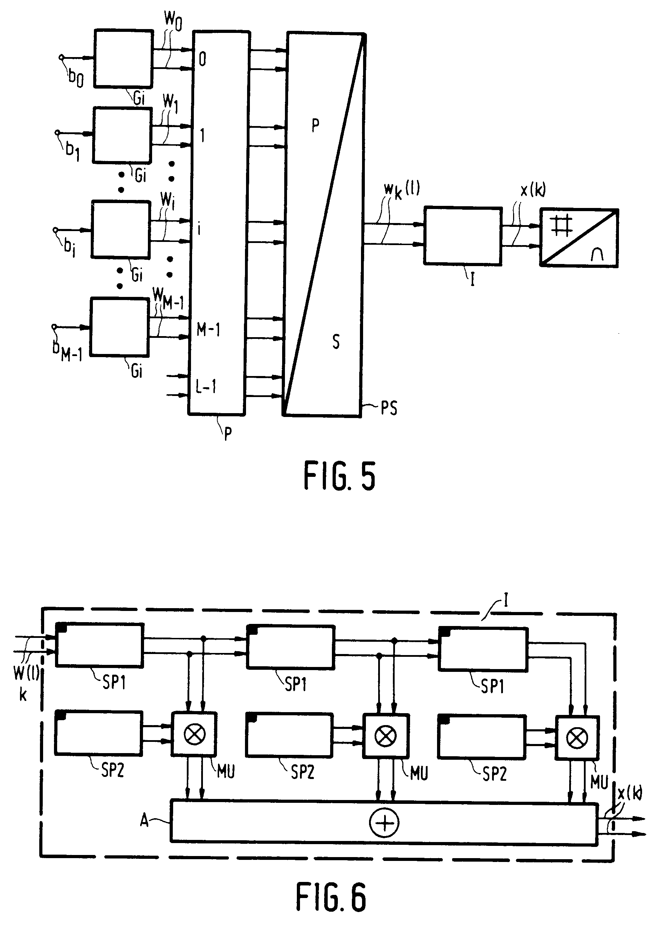

Bei der in Fig. 5 dargestellten Ausführungsform wird die Interpolation gemeinsam für M≤L Funkübertragungskanäle mit einem gemeinsamen Interpolationsfilter I gleichzeitig durchgeführt. Die Ausgangssignale $b_0, ..., b_{M-1}$ von m Sendern S1, ..., SM werden jeweils einem GTFM-Filter Gi zugeführt. Die GTFM-Filter Gi sind, zur Bildung einer inversen diskreten Fourier-Transformation, mit einem Prozessor P verbunden. Die Ausgangssignale des Prozessors P werden einem Parallel-Serien-Wandler PS zugeführt, welcher zur Interpolationsfilterung dessen Ausgangssignals mit einem Interpolator I verbunden ist.

Mit der Impulsantwort H(k) des Interpolators I ergibt sich die Komponente x(k) gemäß der Gleichung (3) zu:

$$(3) \quad x(k) = \sum_{i=0}^{M-1} \sum_{l} h(k-l*L) * Wi(l*L) * e^{j2\frac{\pi}{L}*i*k}$$

Der erste Summenterm beschreibt die Überlagerung von M komplexen Bandpaßsignalen xi. Der zweite Summenterm gibt die vorgenommene Filterung unter Anwendung der Modulation wieder. Da die Impulsantwort h(k) unabhängig vom Kanalindex i ist, kann die Reihenfolge der Summationen in Gleichung (3) vertauscht werden. Für die komplexe Exponentialfunktion gilt die Periodizität gemäß Gleichung (4)

$$(4) \quad e^{j\frac{2\pi}{L} * i(k_0+L)} = e^{j\frac{2\pi}{L}*i*k_0}.$$

Unter Berücksichtigung der Gleichung (4) kann Gleichung (3) umgeformt werden. Es gilt:

$$(5) \quad x(k) = \sum_{1} h(k-1*L) * \sum_{i=0}^{M-1} Wi(1*L)*e^{\left. j\frac{2\pi}{L}*i*[k] \right.}{}_{modL}$$

Der zweite Summenterm kann wegen M L als inverse diskrete Fouriertransformierte (IDFT) der der Folge Wi (l * L) für i = 0, 1, ..., L-1 interpretiert werden, wobei die Kanäle i = M, ..., L-1 nicht belegt sind.

Wegen der periodizität der Exponentialfunktion im zeitlichen Verlauf für Abtastzeitpunkt k genügt es zu jedem Abtastzeitpunkt l eine Transformation durchzuführen, d.h. die Berechnung nur mit der niedrigeren Abtastfrequenz fK durchzuführen. Die eigentliche Erhöhung der Abtastfrequenz erfolgt durch nachträgliche Interpolationsfilterung des Transformationsergebnisses. Es gilt Gleichung (6):

$$(6) \quad w_k(1*L) = \sum_{i=0}^{M-1} Wi(1*L)*e^{\left. j\frac{2\pi}{L}*i*[k] \right.}{}_{modL}$$

Durch Einsetzen von Gleichung (6) in Gleichung (5) ergibt sich die Komponente x(k) zu:

$$7) \quad x(k) = \sum_{1} h(k-1*L)*w_k(1*L)$$

Im Vergleich zur Ausführungsform gemäß Fig. 4 weist die Ausführungsform des digitalen Kopplers K gemäß Fig. 5 die Vorteile auf, daß nur ein einziger Interpolator I anstelle der sonst entsprechend der Anzahl M vorhandenen Interpolatoren Ii erforderlich ist und daß durch einfache Produktsummenbildung mit wenigen Termen eine gleichzeitige Quadraturmodulation durchführbar ist.

In Fig. 6 ist eine Ausführungsform für einen periodisch zeitvariablen Interpolator dargestellt. Als Interpolator I wird ein nichtrekursives Filter mit zweikanaligen Verzögerungsketten verwendet. Der Interpolator I weist zur Speicherung der letzten p Werte der Transformierten eine Anzahl von p Speichern SP1 der Länge L und eine Anzahl p von Speichern SP2 der Länge L zur Speicherung der Impulsantwort auf. Weiterhin sind im Interpolator I eine Anzahl von p zweikanaligen Multiplizierern MU für die Produktbildung von Werten der Transformierten und Werten der Impulsantwort vorgesehen. Die zweikanaligen Multiplizierer MU sind mit einem Addierer A mit einer Anzahl von 2p-Eingängen verbunden, welcher die Produktterme getrennt nach Normal- und Quadraturkomponente N(k), Q(k) aufsummiert.

Die Impulsantwort h(k) der Länge p*L wird im Interpolator I in den p zweikanaligen Verzögerungsketten der Länge L zur Aufnahme der Werte $w_k$(l*L)eingelesen, wobei k = l*L, ..., (l + 1)*L-1 für die letzten p-Transformationen ist. Die p*L Filterkoeffizienten werden in den Speichern SP2 mit je L Registern abgelegt. Zur Berechnung der Abtastwerte der Normal- und Quadraturkomponente N(k), Q(k) des Multiplexsignals x(k) sind bei jedem Abtasttast jeweils nur p Multiplikationen und Additionen erforderlich. Im Hinblick auf eine gute Nachbarkanalselektion werden für p Werte von vorzugsweise p = 3, ..., 8 gewählt.

Da es sich bei den Werten Wi(l*L) um Werte der komplexen Exponentialfunktion handelt, können die Summenterme gemäß der Gleichung (6) umgeformt werden.

$$(8) \quad Wi(1*L)*e^{j\frac{2\pi}{L}i*k} = e^{j(vi+\frac{2\pi}{L}i*k)}$$

EP 0 255 972 B1

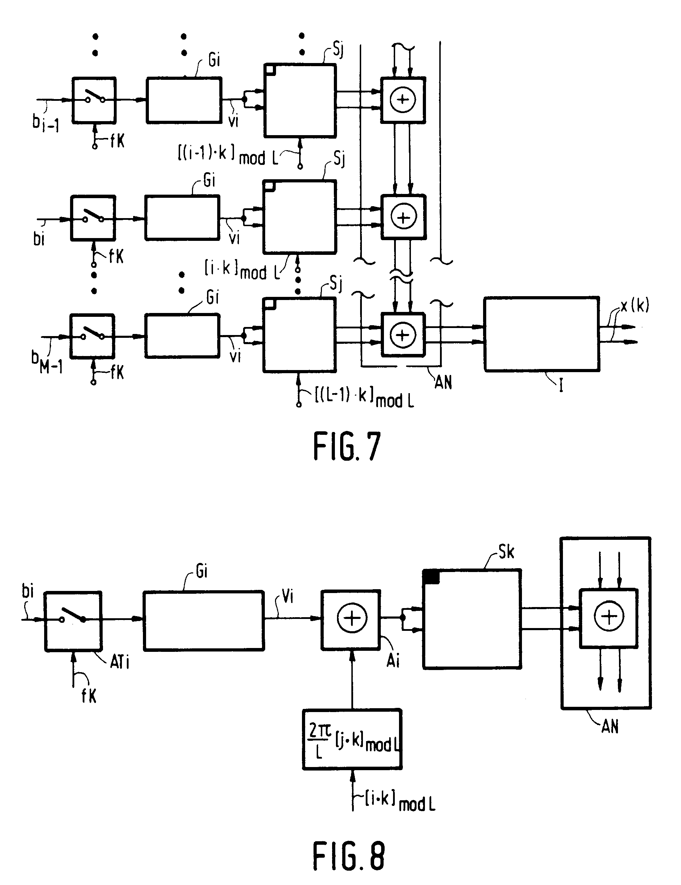

Das produkt wird eindeutig bestimmt durch den Ausgangswert vi des GTFM-Filters Gi sowie durch den Zeitindex k und dem Kanalindex i (bzw. durch (i*k) $_{modL}$). Bei der in Fig. 7 dargestellten Ausführungsform ist deshalb auf die eigentliche produktbildung verzichtet worden und ein erweiterter Cos-Sin-Speicher Sj mit den GTFM-Filtern Gi verbunden.

Die Informationen vi ändern sich mit dem niedrigeren Takt fb, während die Indexadressen mit der höheren Taktfrequenz fK fortgeschaltet werden. Unter der jeweils gültigen Adresse stehen die Werte

$$\cos(vi + \frac{2\pi}{L} i*k)$$

und

$$\sin(vi + \frac{2\pi}{L} i*k).$$

Diese Werte werden aus dem Cos-Sin-Speicher Sj ausgelesen und einem Addiernetzwerk AN zugeführt und dort summiert. Mit dem Addiernetzwerk AN ist der Interpolator I verbunden.

Bei einer in Fig. 8 darstellten weiteren Ausführungsform ist mit jedem GTFM-Filter Gi ein Addierer Ai verbunden. Im Addierer Ai wird die Summe aus dem jeweiligen Inkrement $(2\pi/L)*i*k$ gemäß Gleichung (8) und Argument vi gebildet. Mit dieser Summe wird ein mit jedem Addierer Ai verbundener Speicher Sk direkt adressiert. Im Vergleich zur in Fig. 7 dargestellten Ausführungsform kann dadurch auf eine Erweiterung der Adresseingänge des Speichers Sk verzichtet werden. Die für die Addition erforderlichen Inkremente selbst können in weiteren Speichern abgelegt werden. Insgesamt sind wegen der Periodizität der Exponentialfunktion nur maximal L unterschiedliche Inkremente bereitzustellen.

**Patentansprüche**

1.  Verfahren zum Ankoppeln mehrerer Sender (S1, ..., Sn) unterschiedlicher Trägerfrequenzen an eine Antenne (A), bei dem die Multiplexbildung mittels Bandpaßfilter (BP1, ..., BPn) erfolgt, welche einerseits mittels Leitungen (L1, ..., Ln) mit einem Sternpunkt (S) verbunden sind, Welcher über ene Antennenzuleitung zur Antenne (A) führt, und andererseits über Zirkulatoren (Z1, ..., Zn) mit den Sendern (S1, ..., Sn) in Verbindung stehen, dadurch gekennzeichnet, daß die Ausgangssignale von jeweils M Sendern aus (Sk, ..., Sk*M mit k = 1, ..., n/M) durch digitale Signalverarbeitung mittels eines digitalen Kopplers (K) in einer Gruppenlage zusammengefaßt werden und daß die Ausgangssignale der parallel zueinander angeordneten digitalen Koppler (K) nach Digital-Analog-Umsetzung jeweils einem Zirkulatornetzwerk (ZI, ZII, ..., Zk) zugeführt werden.

2.  Verfahren zum Ankoppeln mehrerer Sender (S1, ..., Sn) unterschiedlicher Trägerfrequenzen an eine Antenne (A), bei dem die Multiplexbildung mittels Bandpaßfilter (BP1, ..., BPn) erfolgt, welche einerseits mittels Leitungen (L1, ..., Ln) mit einem Sternpunkt (S) verbunden sind, welcher über eine Antennenzuleitung zur Antenne (A) führt, und andererseits über Zirkulatoren (Z1, ..., Zn) mit den Sendern (S1, ..., Sn) in Verbindung stehen, dadurch gekennzeichnet, daß die Ausgangssignale ($b_0$ ..., $b_{M-1}$) von jeweils M Sendern aus (Sk, ..., Sk*M mit k = 1, ..., n/M) durch digitale Signalverarbeitung mittels eines digitalen Kopplers (K) in einer Vorgruppenlage zusammengefaßt werden und daß die Ausgangssignale der parallel zueinander angeordneten digitalen Koppler (K) nach Digital-Analog-Umsetzung (DA) und Frequenzumsetzung (FUS) in die Gruppenlage jeweils einem Zirkulator (ZI, ZII, ...Zk) zugeführt werden.

3.  Verfahren nach Anspruch 2, dadurch gekennzeichnet, daß im digitalen Koppler (K) aus den Quellensignalen ($b_0$, ..., $b_{M-1}$) Basisbandsignale erzeugt werden, diese jeweils in die Vorgruppenlage verschoben und danach einander einander additiv überlagert werden.

4.  Verfahren nach Anspruch 3, dadurch gekennzeichnet, daß im digitalen Koppler (K) GTFM-Basisbandsignale (Wi) erzeugt werden und daß zur Verschiebung der GTFM-Basisbandsignale (Wi) in die Vorgruppenlage eine komplexe Quadraturmodulation durchgeführt wird.

7

**5.** Verfahren nach Anspruch 3, dadurch gekennzeichnet, daß im digitalen Koppler (K) GMSK-Basisbandsignale erzeugt werden und daß zur Verschiebung der GMSK-Basisbandsignale in die Vorgruppenlage eine komplexe Quadraturmodulation durchgeführt wird.

**6.** Schaltungsanordnung zum Ankoppeln mehrer Sender (S1...Sn) unterschiedlicher Trägerfrequenzen an eine Antenne (A), bei der zur Multiplexbildung Bandpaßfilter (BP1, ...BPn) Vorgesehen sind, deren Ausgänge in einem Sternpunkt (S) an welchem auch die Antenne (A) angeschlossen ist zusammengefaßt sind,
dadurch gekennzeichnet,
daß vorgesehen ist, Quellensignale ($b_o$, ..., $b_{m-1}$) eines jeweiligen Senders (S1...Sn) jeweils einem mit einer ersten Abtastfrequenz (fK) betriebenen Abtaster (ATi) zuzuführen, welcher mit einem GTFM-Filter (Gi) verbunden ist, daß das GTFM-Filter (Gi) mit einem Cos-Sin-Speicher (Si) verbunden ist, wobei das Ausgangssignal (vi) des GTFM-Filters (Gi) als Adresse dient, daß der Cos-Sin-Speicher (Si) mit einem Interpolator (Ii) verbunden ist, welcher eine digitale Interpolationsfilterung unter Verwendung einer um einen Faktor L höheren zweiten Abtastfrequenz (fx) getrennt für Normal- und Quadratur-Komponente (Ni, Qi) des GTFM-Basisbandsignals (Wi) durchgeführt, und daß der Interpolator (Ii) mit einem Multiplizierer (Mi) verbunden ist, welcher jeweils die gefilterte Normal- und Quadratur-Komponente mit einer Exponentialfunktion verknüpft, wodurch in der Vorgruppenlage eine Komponente (xi) entsteht.

**7.** Schaltungsanordnung zum Ankoppeln mehrer Sender (S1...Sn) unterschiedlicher Trägerfrequenzen an eine Antenne (A), bei der zur Multiplexbildung Bandpaßfilter (BP1, ...BPn) vorgesehen sind, deren Ausgänge in einem Sternpunkt (S) an welchem auch die Antenne (A) angeschlossen ist zusammengefaßt sind,
dadurch gekennzeichnet,
daß die Quellensignale ($b_o$, ..., $b_{M-1}$) eines jeweiligen Senders (S1...Sn) jeweils einem GTFM-Filter (Gi) zugeführt werden, daß zur Bildung einer inversen diskreten Fouriertransformation die GTFM-Filter (Gi) mit einem Prozessor (P) verbunden sind und daß die Ausgangssignale des Prozessors (P) einem Parallel-Serien-Wandler (PS) zugeführt sind, welcher zur Interpolationsfilterung dessen Ausgangssignale mit einem Interpolator (I) verbunden ist.

**8.** Schaltungsanordnung nach Anspruch 7, dadurch gekennzeichnet, daß als Interpolator (I) ein nichtrekursives Filter mit zweikanaligen Verzögerungsketten verwendet wird, welches zur Speicherung der letzten p Werte der Transformierten eine Anzahl von p Speichern (SP1) der Länge L und eine Anzahl von p Speichern (SP2) der Länge L zur Speicherung der Impulsantwort des Interpolators (I) aufweist, daß im Interpolator (I) eine Anzahl von p zweikanaligen Multiplizierern (MU) für die Produktbildung von Werten der Transformierten und Werten der Impulsantwort (h(k)) vorgesehen sind und daß die zweikanaligen Multiplizierer (MU) mit einem Addierer (A) mit einer Anzahl von 2p Eingängen verbunden sind, welche die Produktterme getrennt nach Normal- und Quadratur-Komponente (N(k), Q(k)) aufsummieren.

**9.** Schaltungsanordnung nach Anspruch 7, dadurch gekennzeichnet, daß mit jedem GTFM-Filter (Gi) ein erweiterter Cos-Sin-Speicher (Sj) verbunden ist, welcher durch das Ausgangssignal (vi) des GTFM-Filters (Gi) und durch das Produkt aus (i-1) und k berechnet nach modL adressiert wird, wobei unter der jeweils gültigen Adresse die Werte $\cos(vi + \frac{2\pi}{L} i{*}k)$ und $\sin(vi + \frac{2\pi}{L} i{*}k)$ stehen und daß die aus dem Cos-Sin-Speicher (Sj) ausgelesenen Werte einem Addiernetzwerk (AN) zugeführt und dort summiert werden, welches mit dem Interpolator (I) verbunden ist.

**10.** Schaltungsanordnung nach Anspruch 7, dadurch gekennzeichnet, daß mit dem jedem GTFM-Filter (Gi) ein Addierer (Ai) verbunden ist, welcher einen Speicher (Sk) durch die zuvorgebildete Summe aus vi und $[\frac{2\pi}{L} i{*}k]_{modL}$ direkt adressiert.

**Claims**

**1.** Method for coupling a plurality of transmitters (S1, ..., Sn) having different carrier frequencies to an aerial (A), in which the multiplexing takes place by means of band-pass filters (BP1, ..., BPn) which are connected, on one side, by means of lines (L1, ..., Ln) to a switching network centre (S) which leads to the aerial (A) via an aerial supply line and, on the other side, to the transmitters (S1, ..., Sn) via circulators (Z1, ..., Zn), characterized in that the output signals from M transmitters (Sk, ...,Sk*M with k = 1, ..., n/M) are combined in a group phase by digital signal processing by means of a digital coupler (K) and that the output signals of the parallel arranged digital couplers (K) are each applied to a circulator (ZI, ZII, Zk) after digital-to-analog conversion (DA).

2. Method for coupling a plurality of transmitters (S1, ..., Sn) having different carrier frequencies to an aerial (A), in which the multiplexing takes place by means of band-pass filters (BP1, ..., BPn) which are connected, on one side, by means of lines (L1, ..., Ln) to a switching network centre (S) which leads to the aerial (A) via an aerial supply line and, on the other side, to the transmitters (S1, ..., Sn) via circulators (Z1, ..., Zn), characterized in that the output signals ($b_0$, ..., $b_{M-1}$) from each one of the M transmitters (Sk, ..., Sk*M with k = 1, ..., n/M) are combined by digital signal processing by means of a digital coupler (K) in a pre-group phase and in that the output signals of the parallel-arranged digital couplers (K) are applied to a circulator network (ZI, ZII, ..., Zk) after digital-to-analog conversion (DA) and frequency conversion (FUS) in the group phase.

3. Method as claimed in Claim 2, characterized in that baseband signals are generated in the digital coupler (K) from the source signals ($B_0$, ..., $b_{M-1}$), shifted each time in the pre-group phase and, subsequently, additively superposed on each other.

4. Method as claimed in Claim 3, characterized in that GTFM baseband signals (Wi) are generated in the digital coupler (K) and in that a complex quadrature modulation is carried out to shift the GTFM baseband signals (Wi) in the pre-group phase.

5. Method as claimed in Claim 3, characterized in that GMSK baseband signals are generated in the digital coupler (K) and in that a complex quadrature modulation is carried out to shift the GMSK baseband signals in the pre-group phase.

6. Circuit arrangement for coupling a plurality of transmitters (S1, ..., Sn) having different carrier frequencies to an aerial (A), in which band-pass filters (BP1, ..., BPn) are provided for multiplexing the transmitter output signals, whose outputs are combined at a switching network centre (S) to which also the aerial (A) is connected, characterized in that there is provided to supply source signals ($b_0$, ..., $b_{M-1}$) of each of the transmitters (S1, ..., Sn) each time to a sampler (ATi) operating with a first sampling frequency (fK) and connected to a GTFM filter (Gi), in that the GTFM filter (Gi) is connected to a Cos-Sin store (Si) for which the output signal (vi) of the GTFM filter (Gi) serves as an address, in that the Cos-Sin store (Si) is connected to an interpolator (Ii) which performs a separate digital interpolation filtering for normal components (Ni) and one for quadrature components (Qi) of the GTFM baseband signal (Wi), and in that the interpolator (Ii) is connected to a multiplier (Mi) which combines each filtered normal and quadrature component with an exponential function so that a component (xi) arises in the pre-group phase.

7. Circuit arrangement for coupling a plurality of transmitters (S1, ..., Sn) having different carrier frequencies to an aerial (A), in which band-pass filters (BP1, ..., BPn) are provided for multiplexing the transmitter output signals, whose outputs are combined at a switching network centre (S) to which also the aerial (A) is connected, characterized in that the source signals ($b_0$, ..., $b_{M-1}$) of each transmitter (S1, ..., Sn) are applied to a GTFM filter (Gi), in that the GTFM filters (Gi) are connected to a processor (P) to form an inverse discrete Fourier transform and in that the output signals of the processor (P) are applied to a parallel-to-serial converter (PS) which is connected to an interpolator (I) for the interpolation filtering of its output signals.

8. Circuit arrangement as claimed in Claim 7, characterized in that a non-recursive filter having two-channel delay networks is utilized as a interpolator (I), which filter has a number of p stores (SP1) having a length L for storing the last p values of the transform and a number of p stores (SP2) having the length L for storing the impulse response of the interpolator (I), in that the interpolator (I) includes a number of p two-channel multipliers (MU) for forming the product of values of the transform and values of the impulse response (h(k)) and in that the two-channel multipliers (MU) are connected to an adder (A) which has a number of 2p inputs adding the product terms for normal and quadrature components (N(k), Q(k)) separately.

9. Circuit arrangement as claimed in Claim 7, characterized in that an enlarged Cos-Sin-store (Sj) is connected to each GTFM filter (Gi), which store is addressed by output signal (vi) of the GTFM filter (Gi) and by the modulo-L computed product of (i-1) and k, the valid addresses being the values cos-(vi + {2$\pi$/L)i*k} and sin{vi + (2$\pi$/L)i*k} and in that the values read from the Cos-Sin store (Sj) are applied to an adder network (AN) and added together there, this network being connected to the interpolator (I).

**10.** Circuit arrangement as claimed in Claim 7, characterized in that an adder (Ai) is connected to each GTFM filter (Gi), which adder directly addresses a store (Sk) by means of the previously formed sum from vi and [(2$\pi$/L)i*k]modL.

**Revendications**

**1.** Procédé pour coupler plusieurs émetteurs (S1, ..., Sn) de fréquences porteuses différentes à une antenne (A), dans lequel le multiplexage s'effectue au moyen de filtres passe-bande (BP1, ..., BPn), qui sont connectés, d'une part, via des lignes (L1, ..., Ln), à un point neutre (S) gui mène à l'antenne (A) via une ligne d'amenée d'antenne, et, d'autre part, via des circulateurs (Z1, ..., Zn) aux émetteurs (S1, ..., Sn), caractérisé en ce que les signaux de sortie de M émetteurs respectifs (Sk, ..., Sk*M avec k = 1, ..., n/M) sont regroupés par traitement numérique des signaux au moyen d'un coupleur numérique (K) dans une position de groupage et les signaux de sortie des coupleurs numériques (K) agencés mutuellement en parallèle sont acheminés, respectivement, après conversion numérique-analogique, à un réseau de circulateurs (ZI, ZII, ..., Zk).

**2.** Procédé pour coupler plusieurs émetteurs (S1, ..., Sn) de fréquences porteuses différentes à une antenne (A) dans lequel le multiplexage s'effectue au moyen de filtres passe-bande (BP1, ..., BPn), qui sont connectés, d'une part, via des lignes (L1, ..., Ln) à un point neutre (S) qui mène à l'antenne (A) via une ligne d'amenée d'antenne, et d'autre part, via des circulateurs (Z1, ..., Zn) aux émetteurs (S1, ..., Sn), caractérisé en ce que les signaux de sortie (b$_0$, ..., b$_{M-1}$) de respectivement M émetteurs (Sk, ..., Sk*M avec k = 1, ..., n/M) sont regroupés par traitement numérique des signaux au moyen d'un coupleur numérique (K) dans une position de prégroupage et les signaux de sortie des coupleurs numériques (K) agencés mutuellement en parallèle sont acheminés, après conversion numérique-analogique (DA) et une conversion de fréquence (FUS) dans la position de groupage, respectivement, à un circulateur (ZI, ZII, ..., Zk).

**3.** Procédé selon la revendication 2, caractérisé en ce qu'on produit dans le coupleur numérique (K) à partir des signaux de source (b$_0$, ..., b$_{M-1}$) des signaux en bande de base, qui sont respectivement déplacés dans la position de prégroupage et sont ensuite mutuellement superposés par addition.

**4.** Procédé selon la revendication 3, caractérisé en ce qu'on produit dans le coupleur numérique (K) des signaux en bande de base GTFM (Wi) et on réalise une modulation en quadrature complexe pour déplacer les signaux en bande de base GTFM (Wi) dans la position de prégroupage.

**5.** Procédé selon la revendication 3, caractérisé en ce qu'on produit dans le coupleur numérique (K) des signaux en bande de base GMSK et on réalise une modulation en quadrature complexe pour déplacer les signaux en bande de base GMSK dans la position de prégroupage.

**6.** Montage de circuit pour coupler plusieurs émetteurs (S1, ..., Sn) de fréquences porteuses différentes à une antenne (A), dans lequel sont prévus, pour le multiplexage, des filtres passe-bande (BP1, ..., BPn) dont les sorties sont regroupées en un point neutre (S) auquel l'antenne (A) est connectée, caractérisé en ce qu'il est prévu d'acheminer des signaux de source (B$_0$, ..., B$_{M-1}$) d'un émetteur respectif (S1, ..., Sn) chaque fois à un échantillonneur (ATi) mis en oeuvre à une première fréquence d'échantillonnage (fK), lequel échantillonneur est connecté à un filtre GTFM (Gi), que le filtre GTFM (Gi) est connecté à une mémoire cos-sin (Si), le signal de sortie (vi) du filtre GTFM (Gi) servant d'adresse, que la mémoire cos-sin (Si) est connectée à un interpolateur (Ii) qui réalise un filtrage par interpolation numérique en utilisant une seconde fréquence d'échantillonnage (fx) supérieure d'un facteur L, séparément pour la composante normale et la composante déphasée en quadrature (Ni, Qi) du signal en base de bande GTFM (Wi), et que l'interpolateur (Ii) est connecté à un multiplicateur (Mi) qui combine respectivement la composante normale et la composante déphasée en quadrature filtrées avec une fonction exponentielle, de sorte qu'une composante (xi) apparaît dans la position de prégroupage.

**7.** Montage de circuit pour coupler plusieurs émetteurs (S1, ..., Sn) de fréquences porteuses différences à une antenne (A) dans lequel pour le multiplexage sont prévus des filtres passe-bande (BP1, ..., BPn) dont les sorties sont regroupées dans un point neutre (S) auquel l'antenne (A) est également connectée caractérisé en ce que les signaux de source ($B_0$, ..., $B_{M-1}$) d'un émetteur respectif (S1, ..., Sn) sont acheminés respectivement à un filtre GTFM (Gi) que, pour former une transformation de Fourier discrète inverse, on connecte les filtres GTFM (Gi) à un processeur (P) et que les signaux de sortie du processeur (P) sont acheminés à un convertisseur parallèle-série (PS) qui est connecté à un interpolateur (I) pour le filtrage par interpolation de ses signaux de sortie.

**8.** Montage de circuit selon la revendication 7, caractérisé en ce que l'on utilise comme interpolateur (I) un filtre non récursif avec des lignes à retard à deux canaux, ce filtre présentant, pour le stockage des p dernières valeurs des transformées un nombre de p mémoires (SP1) de longueur L et un nombre de p mémoires (SP2) de longueur L pour le stockage de la réponse impulsionnelle, on prévoit dans l'interpolateur (I) un nombre de p multiplicateurs à deux canaux (MU) pour la formation des produits des valeurs des transformées et des valeurs de la réponse impulsionnelle [k(k)], et les multiplicateurs à deux canaux (MU) sont connectés à un additionneur (A) avec un nombre de 2p entrées, qui totalisent les termes des produits séparément selon la composante normale et la composante déphasée en quadrature [N(k), Q(k)].

**9.** Montage de circuit selon la revendication 7, caractérisé en ce que l'on connecte à chaque filtre GTFM (Gi) une mémoire cos-sin étendue (Sj), qui est adressée par le signal de sortie (vi) du filtre GTFM (Gi) et par le produit de (i-1) et k calculé selon modL, les valeurs
$\cos(vi + \frac{2\pi}{L} i^*k)$ et $\sin(vi + \frac{2\pi}{L} i^*k)$ se trouvant parmi les adresses valables respectives et les valeurs extraites par lecture de la mémoire cos-sin (Sj) sont acneminées à un réseau additionneur (AN) et y sont totalisées, ce réseau étant connecté à l'interpolateur (I).

**10.** Montage de circuit selon la revendication 7, caractérisé en ce qu'à chaque filtre GTFM (Gi) est connecté un additionneur (Ai) qui adresse directement une mémoire (Sk) par la somme formée précédemment de vi et de

$[ \frac{2\pi}{L} i^*k ]_{modL.}$

FIG.1

FIG. 2

FIG. 3a

FIG. 3b

FIG. 4

FIG. 5

FIG. 6

FIG. 7

FIG. 8